# EUROPÄISCHE PATENTSCHRIFT

(11) **EP 1 829 660 B1**
(45) Veröffentlichungstag und Bekanntmachung des Hinweises auf die Patenterteilung: **12.01.2011**
(21) Anmeldenummer: 07003320.4
(22) Anmeldetag: 16.02.2007
(51) Int. Cl.: B29B 7/48

(54) **Misch- und Knetmaschine für Kunststoffmassen**
Mixer and kneader for plastics
Machine de mélange et de malaxage pour masses en plastiques

(30) Priorität: 03.03.2006 DE 102006010458
(43) Veröffentlichungstag der Anmeldung: 05.09.2007
(73) Patentinhaber: Zeppelin Reimelt GmbH, 63322 Rödermark (DE)
(72) Erfinder: Rockstedt Siegward, 1858 Luxembourg (LU)
(74) Vertreter: Dantz, Jan Henning

(56) Entgegenhaltungen:
- DE-A1- 2 027 910
- DE-C- 148 487
- DE-C- 582 889
- FR-A- 2 331 431
- GB-A- 1 200 919

## Beschreibung

Die Erfindung betrifft eine Misch- und Knetmaschine nach dem Oberbegriff des Anspruchs 1.

Misch- und Knetmaschinen dieser Art, die auch als zwei- oder mehrwellige Extruder oder Compounder oder allgemein als Bearbeitungsmaschinen für plastifizierbare Massen bezeichnet werden können, dienen in der Kunststoffindustrie dem Zweck, einen als Pulver, Granulat, Flüssigkeit od. dgl. zugeführten Rohstoff, z. B. ein Thermoplast, zu fördern, zu verdichten, aufzuschmelzen bzw. zu plastifizieren und zu mischen und/oder zu kneten, bevor das bearbeitete Material als mehr oder weniger pastöse oder flüssige Masse durch eine Austrittsöffnung ausgetragen wird. Dabei ist es auch möglich, in unterschiedlichen Aggregatzuständen vorliegende Massen wie z. B. Flüssigkeiten und diesen zugemischte, pulverförmige Farbpigmente zu einer homogenen Dispersion zu verarbeiten. Unabhängig von ihrem speziellen Anwendungszweck werden derartige Bearbeitungsmaschinen nachfolgend unter dem Sammelbegriff "Misch- und Knetmaschinen" zusammengefasst.

Übliche Misch- und Knetmaschinen weisen zwischen je einer Einzugs- und Austragszone wenigstens eine Bearbeitungszone zum Bearbeiten der Kunststoffmassen durch Mischen, Kneten, Dispergieren, Aufschmelzen usw. auf. Zu diesem Zweck sind die wenigstens zwei Wellen in der Einzugs- und Austragszone mit Schneckenwellensegmenten und zwischen diesen mit Segmenten versehen, die je nach Anwendungszweck unterschiedliche, radial abstehende Bearbeitungselemente aufweisen. Bekannt sind z. B. Misch- und Knetmaschinen der eingangs bezeichneten Gattung mit ineinander greifenden Dispergierelementen in Kombination mit schneckenförmigen, nicht in gegenseitigem Eingriff befindlichen Längsmischelementen (z. B. DE 16 79 884 A1) oder mit ebenfalls nicht ineinander greifenden Knetelementen, die Querschnitte mit meistens scharfen Scherkanten haben (DE 42 02 821 C2). Außerdem sind Misch- und Knetmaschinen der eingangs bezeichneten Gattung mit nicht im Eingriff befindlichen, schneckenförmigen Mischelementen bekannt, die teils vorwärts und teils rückwärts fördernd ausgebildet sind, wobei in Förderrichtung hinter der Bearbeitungszone eine zusätzliche Stauzone in Form eines Schneckenwellensegments vorgesehen ist, das ein zum Schncekenwellensegment der Einzugszone gegenläufiges Gewinde aufweist (DE 43 38 795 C1). Schließlich sind Misch- und Knetmaschinen der eingangs bezeichneten Gattung bekannt, deren Wellen mit in axialer Richtung beabstandeten Flanschabschnitten versehen sind, wobei die Flanschabschnitte der beiden Wellen zur Anpassung an unterschiedliche Materialien in Drehrichtung relativ zueinander versetzt werden können (DE 20 27 910 A1, die eine Misch- und Knetmaschine gemäß dem oberbegriff des Anspruchs 1 offenbart).

Allen genannten Misch- und Knetmaschinen ist gemeinsam, dass die der Bearbeitung dienenden Wellensegmente entweder aneinander vorbeilaufende oder ineinander greifende Bearbeitungselemente aufweisen. Aneinander vorbeilaufende Bearbeitungselemente sind meistens allein wenig wirksam und nur mit nachgeschalteten Stauzonen richtig funktionsfähig, weil die zu bearbeitenden Materialien andernfalls durch die zwischen den Wellen bzw. diesen und dem Gehäuse verbleibenden Durchtrittspalte hindurch unkontrolliert abfließen können. Außerdem weisen beide Arten von Bearbeitungselementen in der Regel vergleichsweise scharfe Kanten auf, durch die die zuströmenden Massen bereits beim Eintritt in die jeweilige Bearbeitungszone abrupt einer erheblichen Scherwirkung unterworfen werden, was einer kontrollierten Bearbeitung der Kunststoffmassen und einer schonenden Behandlung sowohl der Kunststoffmassen als auch der Bearbeitungselemente entgegen wirkt.

Ausgehend davon besteht das technische Problem der vorliegenden Erfindung darin, die Misch- und Knetmaschine der eingangs bezeichneten Gattung so auszubilden, dass der Bearbeitungsvorgang besser kontrolliert werden kann und eine schonendere

Behandlung des Bearbeitungsguts und der Bearbeitungselemente erzielt wird.

Zur Lösung dieser Aufgabe dienen die kennzeichnenden Merkmale des Anspruchs 1.

Die Erfindung bringt den Vorteil mit sich, dass die Bearbeitungselemente selbst als Staustufen ausgebildet sind und die Außenquerschnitte der Staustufen in Förderrichtung allmählich zunehmen. Die Bearbeitungszone stellt daher einen kombinierten Bearbeitungs- und Staubereich dar, so dass zusätzliche Stauzonen nicht erforderlich sind. Außerdem werden die am Eingang der Bearbeitungszone zuströmenden Kunststoffmassen zunächst mittels der noch nicht im Eingriff befindlichen Bearbeitungselemente vergleichsweise schonend aufgenommen und behandelt, während danach in Richtung des Ausgangs der Bearbeitungszone eine allmählich immer intensivere Bearbeitung erfolgt, bis das Material völlig aufgeschmolzen, gemischt oder sonstwie bearbeitet ist. Die unterschiedlichen Außenquerschnitte der Staustufen ermöglichen dabei die Bildung entsprechend unterschiedlicher, allmählich kleiner werdender Durchtrittspalte zwischen den Wellen bzw. zwischen diesen und dem umgebenden Gehäuse, wodurch eine verbesserte Kontrolle des Bearbeitungsvorgangs möglich ist.

Weitere vorteilhafte Merkmale der Erfindung ergeben sich aus den Unteransprüchen.

Die Erfindung wird nachfolgend in Verbindung mit den beiliegenden Zeichnungen näher erläutert. Es zeigen:
Fig. 1 einen in Förderrichtung verlaufenden Vertikalschnitt durch eine erfmdungsgemäße, zweiwellige Misch- und Knetmaschine;
Fig. 2 einen in Förderrichtung verlaufenden Horizontalschnitt durch die Misch- und Knetmaschine nach Fig. 1;
Fig. 3 eine schematische und gegenüber Fig. 1 und 2 stark vergrößerte Draufsicht auf einer Bearbeitungszone zugeordnete Wellensegmente der Misch- und Knetmaschine nach Fig. 1 und 2 ohne ein umgebendes Gehäuse und mit einem ersten Ausführungsbeispiel von Bearbeitungselementen;
Fig. 4 bis 6 schematische Querschnitte durch die Misch- und Knetmaschine längs der Schnittlinien IV-IV bis VI-VI der Fig. 3 in einem etwas verkleinerten Maßstab und mit einem umgebenden Gehäuse;
Fig. 7 bis 10 in unterschiedlichen Maßstäben der Fig. 3 entsprechende Ansichten von Wellensegmenten mit weiteren Ausführungsbeispielen für die Bearbeitungselemente.

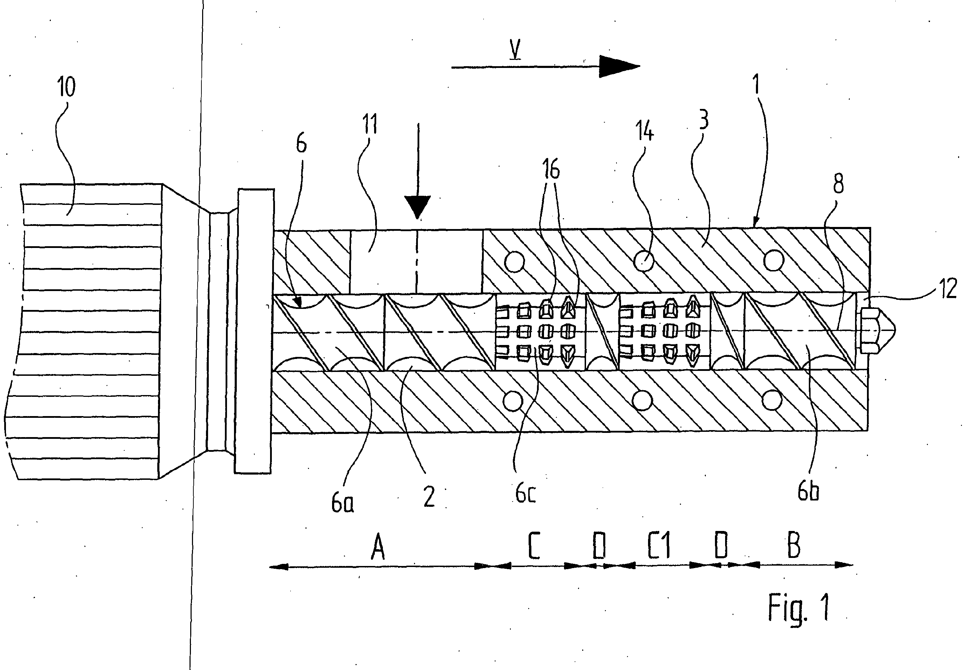

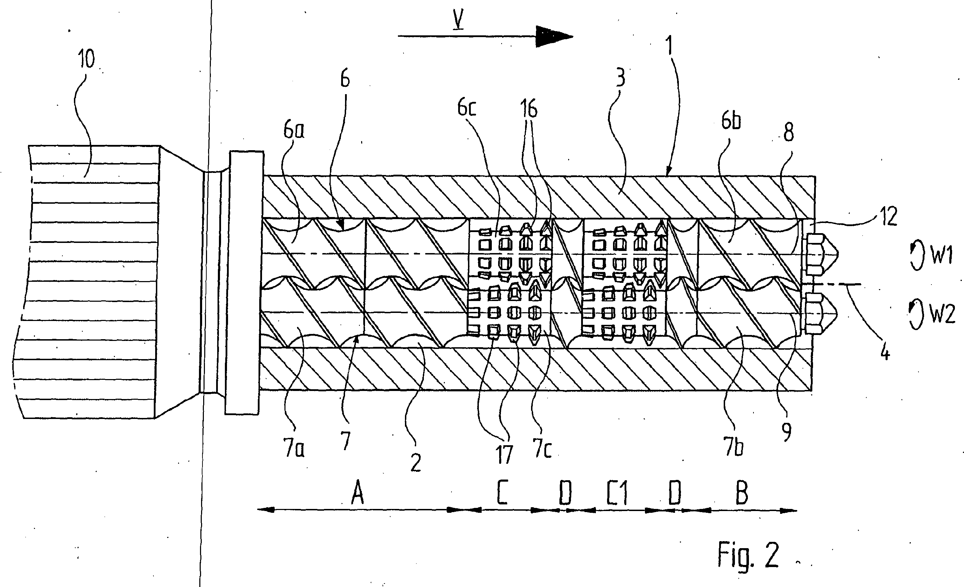

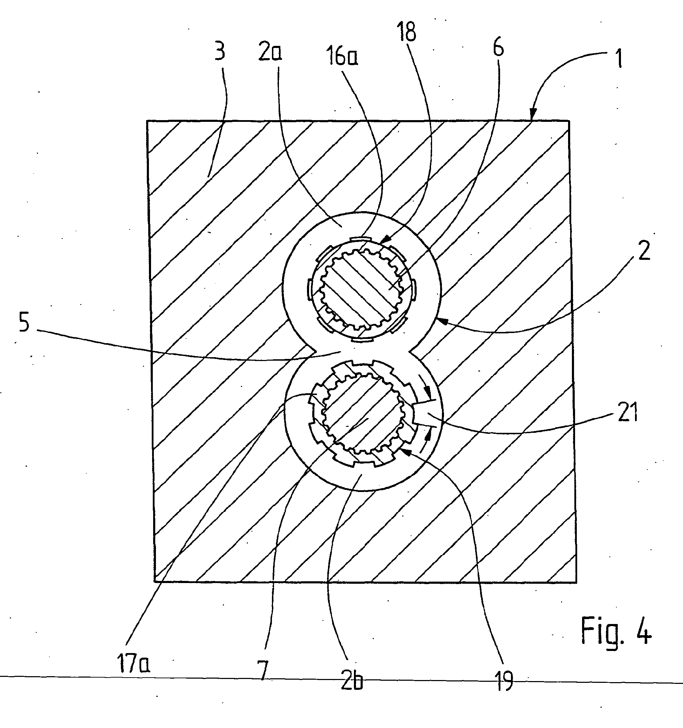

Nach Fig. 1 bis 6 enthält eine kontinuierlich arbeitende, zweiwellige Misch- und Knetmaschine ein Gehäuse 1, das gemäß Fig. 1 und 2 eine einen Hohlraum 2 umgebende Gehäusewand 3 sowie eine in Förderrichtung (Pfeil v) erstreckte Längsachse 4 aufweist. Gemäß Fig. 4 bis 6 ist der Hohlraum 2 wie üblich mit einem nach Art einer Acht ausgebildeten Querschnitt versehen und aus zwei im wesentlichen zylindrischen Teilräumen 2a, 2b zusammengesetzt, die längs eines zur Längsachse 4 parallelen, offenen Spalts 5 aneinander grenzen. In jedem dieser Teilräume 2a, 2b ist mit nicht dargestellten Mitteln je eine Welle 6, 7 um je eine zur Längsachse 4 parallele Drehachse 8, 9 drehbar gelagert. Die gleichsinnige Drehbewegung der beiden Wellen 6, 7 in Richtung von Pfeilen w1, w2 (Fig. 2) wird z. B. mit einem als Elektromotor ausgebildeten und ein nicht dargestelltes Getriebe aufweisenden Antrieb 10 bewirkt.

An einem mit dem Antrieb 10 gekuppelten Ende der Wellen 6, 7 ist die Gehäusewand 3 mit einer Eintrittsöffnung 11 (Fig. 1) versehen, durch die ein Bearbeitungsgut, z. B. ein thermoplastisches Kunststoffgranulat, in den von den Wellen 6, 7 frei gelassenen Teil des Hohlraums 2 eingetragen wird.

Der Hohlraum 2 des Gehäuses 1 ist, ausgehend von dem mit dem Antrieb 10 versehenen Ende, mit einer Einzugszone A und an einem entgegengesetzt dazu liegenden Ende mit einer Austragszone B versehen. Zwischen diesen beiden Zonen A und B ist wenigstens eine Bearbeitungszone C angeordnet.

Unterhalb der Eintrittsöffnung 11 und in einem in Förderrichtung an diese angrenzenden, die Einzugszonen A bildenden Bereich weisen die Wellen 6, 7 gleichsinnig ausgebildete Schneckenwellensegmente 6a, 7a auf, durch die das Bearbeitungsgut bei in Richtung der Pfeile w1, w2 erfolgender Drehung der Wellen 6, 7 zur Bearbeitungszone C transportiert wird. Von deren Ausgang aus wird das Bearbeitungsgut dann durch weitere, weiter unten erläuterte Zonen D, C1, D hindurch bis in die Austragszone B befördert. Im Bereich der Austragszone B sind die Wellen 6, 7 mit den Segmenten 6a, 7a entsprechenden Schneckenwellensegmenten 6b, 7b versehen, die das zugeführte Bearbeitungsgut in Förderrichtung (Pfeil v) weiter transportieren und schließlich an einem vom Antrieb 10 entfernten Ende der Wellen 6, 7 durch eine Austrittsöffnung 12 abgeben, die z. B. durch eine entsprechende Gehäuseöffnung gebildet ist.

Das Gehäuse 1 bzw. die Gehäusewand 3 kann weiterhin mit nur schematisch dargestellten Kanälen 14 (Fig. 1) versehen sein, die zur Durchleitung eines Heiz- oder Kühlmediums dienen, um das Bearbeitungsgut bei Bedarf in der gewünschten Weise zu erhitzen oder abzukühlen. Auch andere Einrichtungen zum Erwärmen bzw. Kühlen der Kunststoffmassen sind denkbar. Außerdem ist es möglich, die Gehäusewand 3 mit weiteren Eintrittsöffnungen 11 zu versehen, um bei Bedarf mehrere unterschiedliche Materialien oder zusätzliche Zuschlagstoffe in den Hohlraum 2 einbringen zu können.

Misch- und Knetmaschinen dieser Art sind aus den eingangs angegebenen und anderen Druckschriften allgemein bekannt und brauchen dem Fachmann nicht näher erläutert werden.

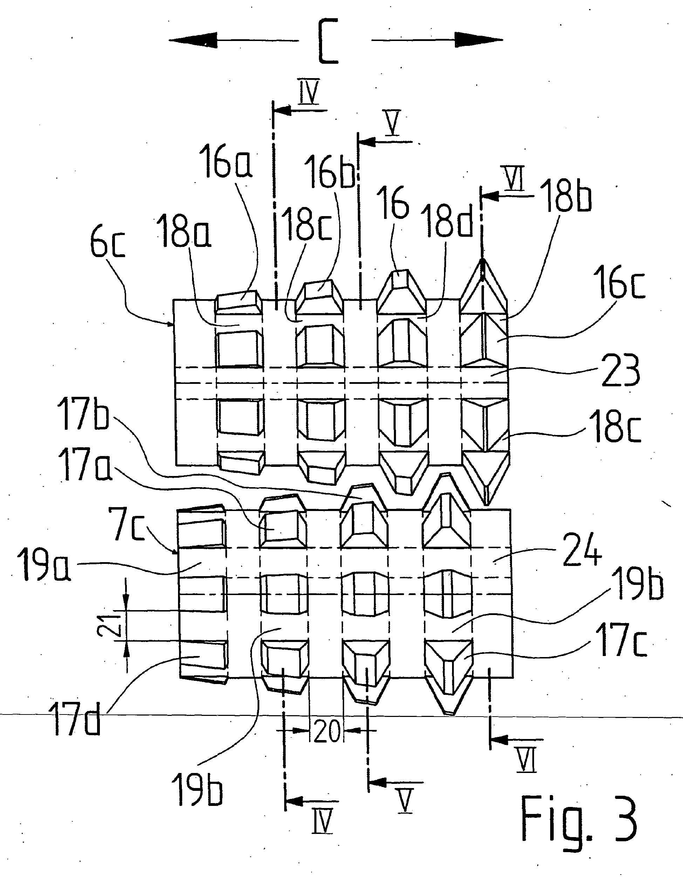

Innerhalb der Bearbeitungszone C weisen die Wellen 6, 7 Segmente 6c, 7c auf, die mit quer zur Förderrichtung bzw. quer zu den Drehachsen 8, 9 erstreckten Bearbeitungselementen 16 bzw. 17 versehen sind. Diese Bearbeitungselemente 16, 17 bestehen im Ausführungsbeispiel der Fig. 1 bis 6 aus einzelnen, radial zu den Drehachsen 8, 9 angeordneten Vorsprüngen, die sowohl in Förderrichtung als auch quer dazu voneinander beabstandet sind. Im Ausführungsbeispiel liegen die Bearbeitungselemente 16 auf vier zur Drehachse 8 koaxialen, in Fig. 3 durch gestrichelte Linien angedeuteten Ringen bzw. Kreisen 18 und entsprechend die Bearbeitungselemente 17 auf vier zur Drehachse 9 koaxialen Ringen bzw. Kreisen 19, so dass sie hier zu je vier durch Zwischenräume unterbrochenen Ringen 18, 19 zusammengefasst sind.

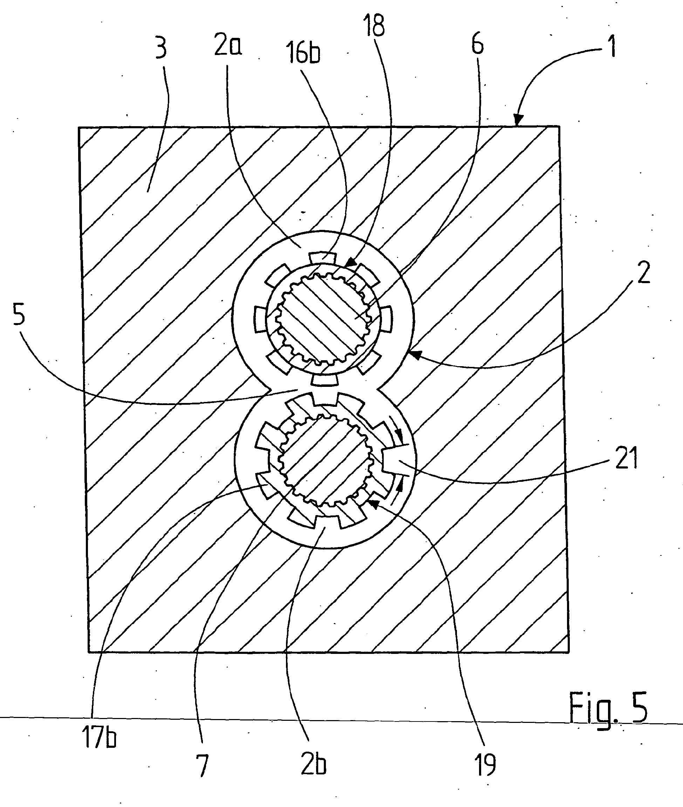

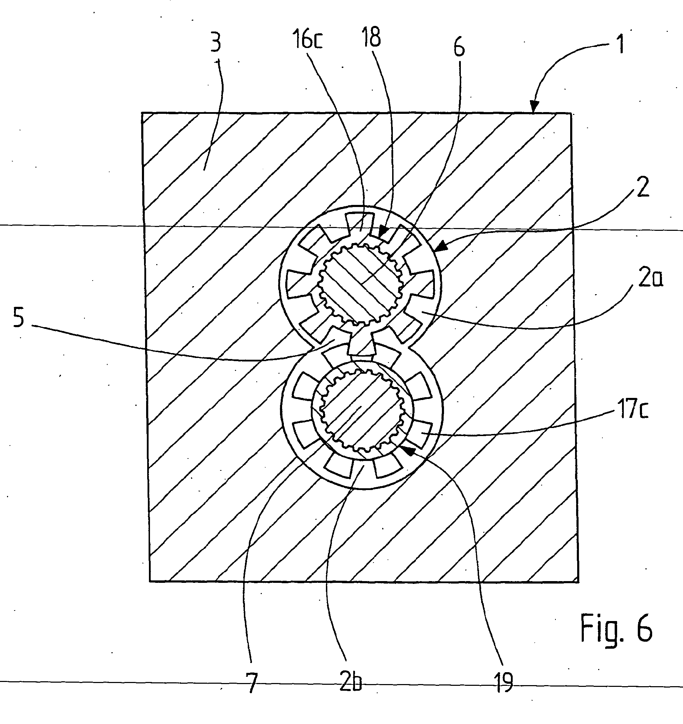

In weiterer Ausgestaltung der Erfindung weisen die Bearbeitungselemente 16 und 17, in Förderrichtung v betrachtet, allmählich größer werdende Außenquerschnitte auf. Insbesondere besitzen vorzugsweise auf der Eintrittsseite zur Bearbeitungszone C gelegene Bearbeitungselemente 16a bzw. 17a vergleichsweise kleine, in radialer Richtung gemessene Höhen (Fig. 4), die in Förderrichtung v allmählich zunehmen (16b, 17b in Fig. 5), bis an der Austrittsseite der Bearbeitungszone C gelegene Bearbeitungselemente 16c, 17c (Fig. 6) die größten radialen Abmessungen haben. Mit anderen Worten haben die einen ersten Ring 18a, 19a bildenden Bearbeitungselemente 16a, 17d radiale Höhen, die kleiner sind, als dem halben Abstand der Drehachsen 8, 9 voneinander entspricht, während die einen letzten Ring 18b, 19b bildenden Bearbeitungselemente 16c, 17c radiale Höhen aufweisen, die größer als der halbe Abstand der Drehachsen 8, 9 voneinander sind.

Durch die erfindungsgemäße Anordnung und Bemessung der Bearbeitungselemente 16, 17 stellen diese bzw. die von ihnen gebildeten Ringe 18, 19 innerhalb der Bearbeitungszone C je eine Staustufe für das zugeführte Material dar. Dabei ist die Anordnung gemäß Fig. 3 mit besonderem Vorteil so getroffen, dass die radial niedrigsten Bearbeitungselemente 16a, 17d selbst dann, wenn sie beim gleichsinnigen Drehen der Wellen 6, 7 einander unmittelbar gegenüberstehend angeordnet werden, einander nicht berühren. Dagegen sind die radial höchsten Bearbeitungselemente 16c, 17c so hoch, dass sie beim Drehen der Wellen 6, 7 gegeneinander stoßen könnten. Daher sind zumindest diese Bearbeitungselemente 16c, 17c so angeordnet, dass sie sich beim Drehen der Wellen 6, 7 niemals unmittelbar gegenüber stehen. Sie sind zu diesem Zweck entweder in Umfangsrichtung und/oder, wie aus Fig. 3 ersichtlich ist, in Förderrichtung v relativ zueinander so versetzt, dass die in einem der Ringe 18 angeordneten Bearbeitungselemente 16 (z. B. 16a) in axiale Zwischenräume 20 zwischen zwei gegenüber liegenden, von Bearbeitungselementen 17 gebildeten Ringen 19 (z. B. 19a und 19b) und umgekehrt Vorsprünge 17 (z. B. 17b) von Ringen 19 in entsprechende axiale Zwischenräume 20 zwischen Ringen 18 (z. B. 18c, 18d) eintreten können. Alternativ könnte vorgesehen sein, die Bearbeitungselemente 16, 17 in Umfangsrichtung mit Zwischenräumen 21 zu versehen und so relativ zueinander zu versetzen, dass die Bearbeitungselemente 16 der einen Welle 6 in die Zwischenräume 21 zwischen den Bearbeitungselementen 17 der anderen Welle 7 eintreten und umgekehrt. Mit anderen Worten stehen zumindest die höheren Bearbeitungselemente 16, 17 relativ zueinander derart auf Lücke, dass sie beim Drehen der Wellen 6, 7 nicht miteinander kollidieren können, sondern ineinander greifen.

Anstelle der aus Fig. 3 ersichtlichen vier Staustufen bzw. Ringe 18, 19 können natürlich auch mehr oder weniger Staustufen in der Bearbeitungszone C vorgesehen sein.

Die Bearbeitungselemente 16, 17 können in Abhängigkeit vom gewünschten Anwendungszweck unterschiedliche Größen und Formen aufweisen. Anstelle der Dreiecks- bzw. Trapezformen nach Fig. 3 sind insbesondere auch runde, quadratische, rechteckige und ovale Formen möglich. Die jeweilige Form wird vorzugsweise in Abhängigkeit davon gewählt, wie es für die im Einzelfall gewünsche Bearbeitung (z. B. Mischen, Kneten, Aufschmelzen od. dgl.) zweckmäßig ist, wobei bevorzugt solche Formen verwendet werden, die keine aggressiven Scherspitzen aufweisen, wie dies für übliche Knetblöcke gilt.

Fig. 4 bis 6 zeigen je eine Staustufe mit unterschiedlicher Stauwirkung. Jede Staustufe wird durch mehrere, auf einem Ring 19 bzw. auf einem Umfangsabschnitt der Welle 7 verteilt angeordnete Bearbeitungselemente 17 und die zwischen diesen angeordneten Zwischenräume 21 in Form von Nuten bzw. Lücken gebildet. Die Bearbeitungselemente 17a und 17b weisen gemäß Fig. 4 und 5 kürzere und mittlere radiale Höhen auf. In entsprechender Weise zeigt Fig. 6 eine Staustufe, die durch einen Ring 18 von durch entsprechende Zwischenräume 21 beabstandeten Bearbeitungselementen 16c mit vergleichsweise großer Höhe gebildet ist. Daraus ist einerseits klar ersichtlich, dass die Staustufen mit in Förderrichtung allmählich zunehmenden Außenquerschnitten versehen sind und daher zu einer stetig zunehmenden Verdichtung des Bearbeitungsgutes führen. Andererseits ist die Staustufe nach Fig. 4 radial so klein, dass kein Ineinandergreifen der Bearbeitungselemente 16, 17 möglich ist, während z. B. die Staustufe nach Fig. 6 so hoch ist, dass hier die Bearbeitungselemente 16c, 17c in gegenseitigen Eingriff gelangen.

Die beschriebenen Staustufen haben zur Folge, dass sowohl zwischen der Gehäusewand 3 und den Wellensegmenten 6c, 7c bestehende, von den frei bleibenden Hohlraumabschnitten 2a, 2b gebildete Durchtrittsspalte als auch die im Bereich des Spalts 5, d. h. zwischen den Wellensegmenten 6c, 7c frei bleibenden Durchtrittspalte in Förderrichtung v allmählich enger werden. Dadurch wird die zugeführte Kunststoffmasse am Eingang zur Bearbeitungszone C zunächst nur wenig und vergleichsweise schonend von den Bearbeitungselementen 16, 17 bearbeitet, worauf in Förderrichtung fortschreitend eine immer intensivere Bearbeitung erzielt wird, bis am Austritt aus der Bearbeitungszone C die intensivste Bearbeitung stattfindet. Soll die Intensität der Bearbeitung von Staustufe zu Staustufe im wesentlichen gleichförmig zunehmen, dann werden die Höhen der Bearbeitungselemente 16, 17 zweckmäßig so bemessen, dass die freien Enden der Bearbeitungselemente 16, 17 auf zu den Drehachsen 8, 9 koaxialen Konus- bzw. Kegelstumpfflächen liegen, wobei die Konus- bzw. Kegelwinkel entsprechend der gewünschten Reduzierung der Durchtrittsspalte von Staustufe zu Staustufe bemessen werden.

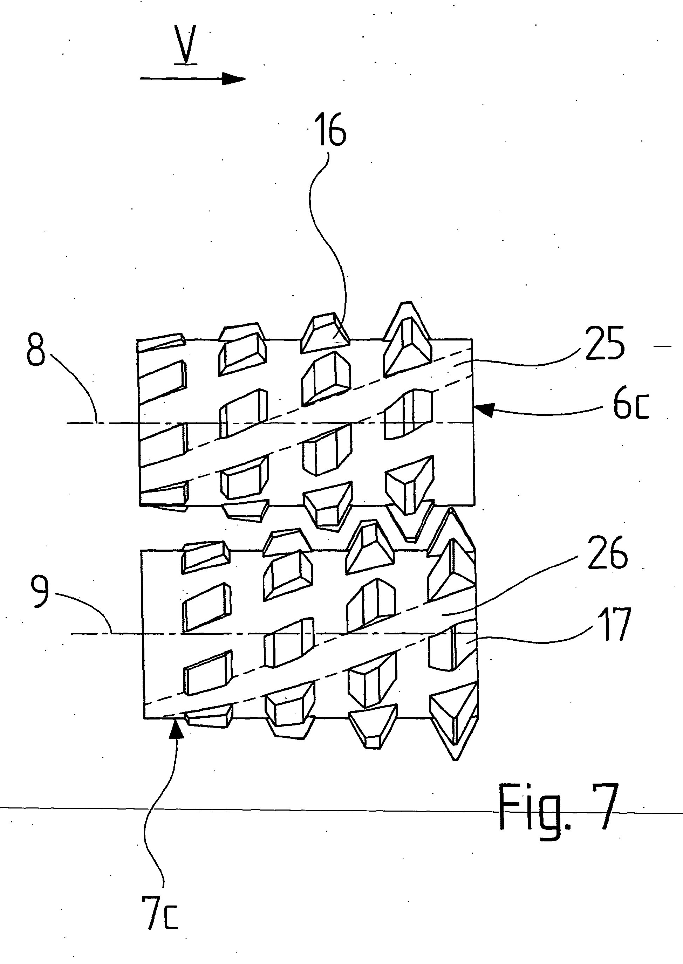

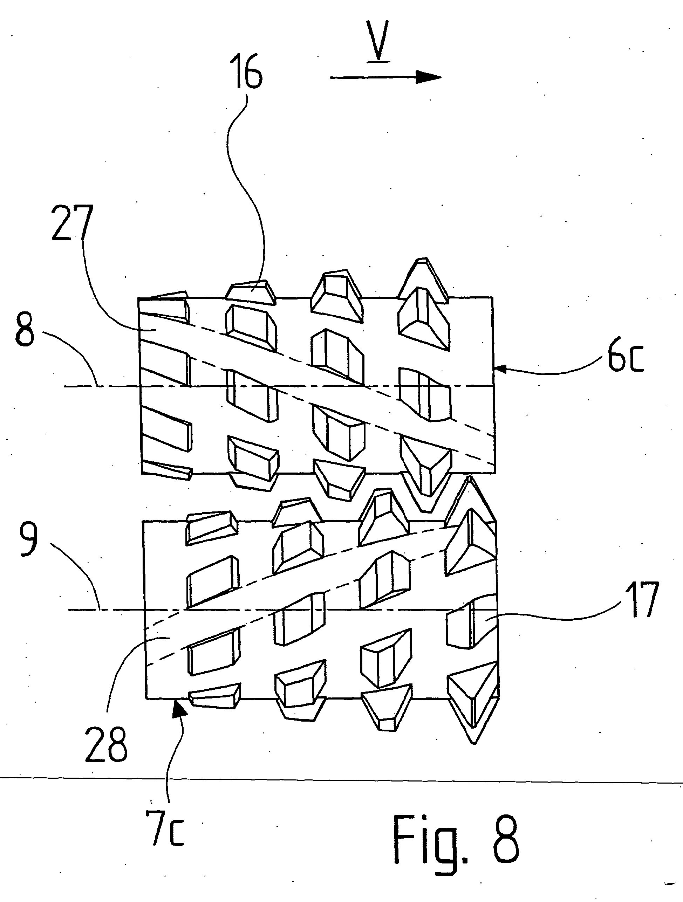

Fig. 3 zeigt schließlich auch, dass die Bearbeitungselemente 16, 17 in Förderrichtung so angeordnet sind, dass sie zwischen sich zur Förderrichtung parallele Gassen 23 bzw. 24 für das Bearbeitungsgut bilden. Diese Gassen 23, 24 sind in Fig. 3 durch gestrichelte, parallel zu den Drehachsen 8, 9 verlaufende Linien kenntlich gemacht. Dadurch verhalten sich diese Gassen 23, 24 im Hinblick auf den Transport des Bearbeitungsgutes neutral. Dagegen zeigen Fig. 7 und 8 zwei Ausführungsbeispiele, bei denen die Bearbeitungselemente 16, 17 bei sonst im wesentlichen gleicher Ausbildung und Dimensionierung eine Mehrzahl von Gassen 25, 26 bzw. 27, 28 bilden, die wiederum durch gestrichelte Linien kenntlich gemacht sind und mit den Drehachsen 8, 9 bzw. der Förderrichtung v einen Winkel bilden. Dieser Winkel ist in Fig. 7 so gewählt, dass die Gassen 25, 26, bezogen auf die Förderrichtung v und die Drehrichtungen w1 und w2 (Fig. 2), eine in Rückwärtsrichtung fördernde Wirkung haben. Dagegen sind die Winkel in Fig. 8 so gewählt, dass die Gassen 27 der Welle 6 fördernd und die Gasse 28 der Welle 7 rückfördernd ausgebildet sind. Dadurch kann im Bereich der Bearbeitungszone C je nach Bedarf eine zusätzliche Förder- oder Stauwirkung erzielt werden.

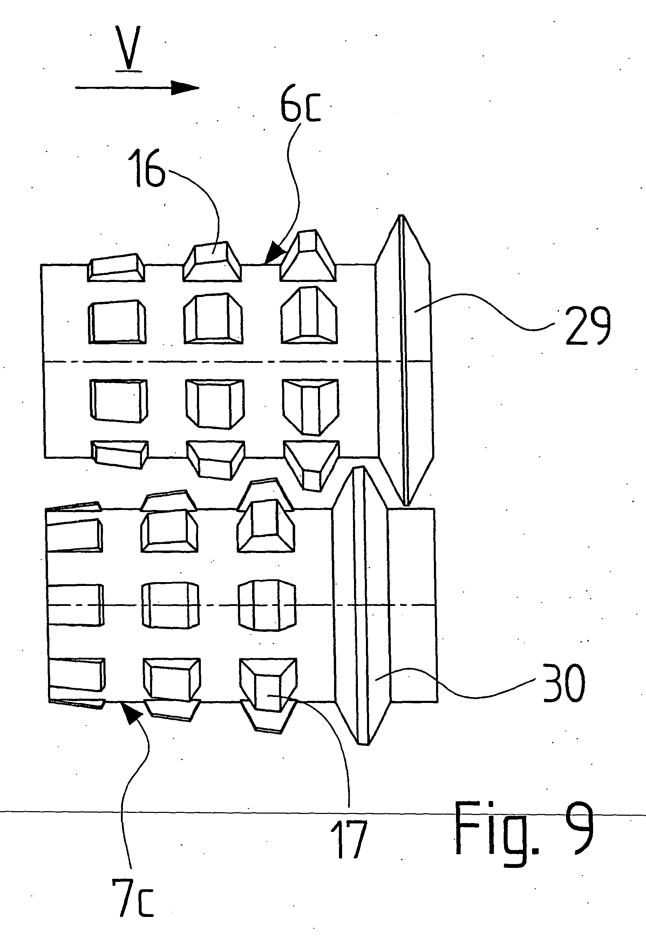

Bei dem bisher für am besten gehaltenen Ausführungsbeispiel nach Fig. 9 ist bei sonst im wesentlichen gleicher Ausgestaltung der Wellensegmente 6c und 7c vorgesehen, die in Förderrichtung letzten, am hinteren Ende der Bearbeitungszone C liegenden Staustufen nicht durch eine Mehrzahl von in Umfangsrichtung beabstandeten Vorsprüngen, sondern durch Bearbeitungselemente 29, 30 auszubilden, die aus in Umfangsrichtung ununterbrochenen, kreisscheiben- oder ringförmig ausgebildeten Wellenabschnitten bestehen. Diese Ausbildung macht es möglich, am Ausgang der Bearbeitungszone C die zwischen den Wellen 6, 7 und den Bearbeitungselementen 29, 30 einerseits und den Wellen 6 und 7, den Bearbeitungselementen 29, 30 und der Gehäusewand 3 andererseits vorhandenen Durchtrittsspalte exakt festzulegen. Dies gilt insbesondere dann, wenn die Innenmäntel der Gehäusewand 3 entsprechend Fig. 4 bis 6 längs Zylinderflächen verlaufen. Dadurch ist es möglich, die genannten Durchtrittsspalte so zu bemessen, dass nur Kunststoffpartikel, die kleiner als diese Durchtrittsspalte sind, die Bearbeitungszone C verlassen, was eine genaue Kontrolle des Bearbeitungsvorgangs und der Größe der die Bearbeitungszone C verlassenden Kunststoffpartikel ermöglicht.

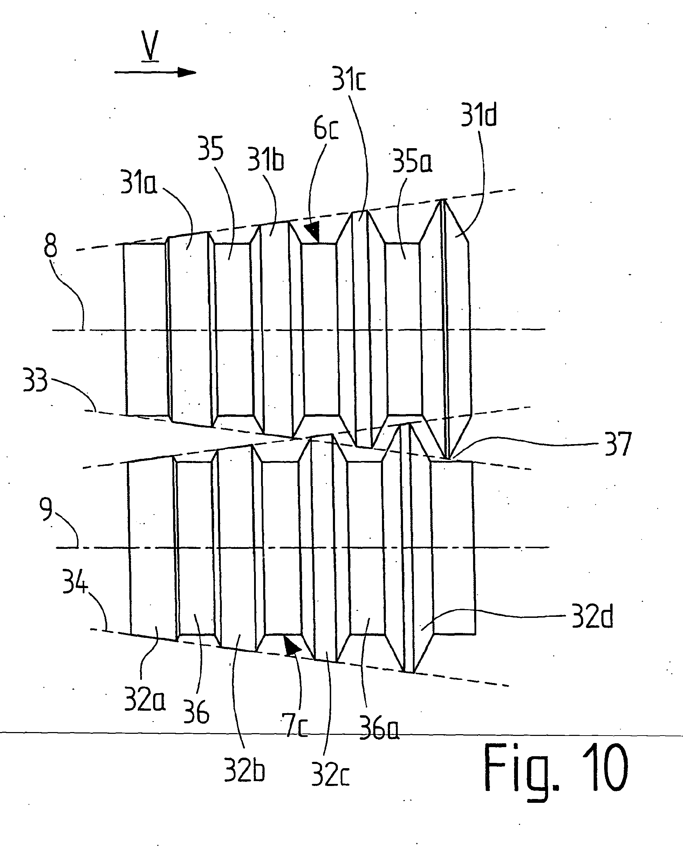

Eine bei Bedarf noch bessere Kontrolle des Bearbeitungsvorgangs ist mit dem in Fig. 10 gezeigten Ausführungsbeispiel möglich. Bei diesem sind alle Staustufen durch kreisringförmig ausgebildete Bearbeitungselemente 31a bis 31d auf der Welle 6 und 32a bis 32d auf der Welle 7 ausgebildet. Alle Staustufen bestehen daher hier aus ununterbrochenen Wellenabschnitten, die in Förderrichtung zunehmende Außendurchmesser aufweisen. Die Bearbeitungselemente 31, 32 können z. B. dadurch hergestellt werden, dass zunächst von Wellen oder Wellensegmenten mit konischen Umfangsflächen 33, 34 ausgegangen wird, die in Fig. 10 durch gestrichelte Linien angedeutet und koaxial zu den Drehachsen 8, 9 angeordnet sind. In diese Umfangsflächen 33, 34 werden dann von außen her in Umfangsrichtung verlaufende Umfangsnuten 35, 36 eingearbeitet, die die kreisscheibenartigen Bearbeitungselemente 31, 32 stehen lassen.

Analog zu Fig. 3 und 7 bis 9 werden die Außendurchmesser der Bearbeitungselemente 31, 32 so gewählt, dass diese am Eingang zur Bearbeitungszone C kleiner sind, als dem Abstand der Drehachsen 8, 9 entspricht, und daher keine gegenseitige Berührung bzw. kein Ineinandergreifen möglich ist. In Förderrichtung werden die Außendurchmesser der Bearbeitungselemente 31, 32 dagegen, den Konusflächen 33, 34 folgend, allmählich größer, bis sich die Konusflächen 33, 34 kreuzen. Spätestens ab dieser Stelle müssen die Umfangsnuten 35, 36 in der aus Fig. 10 ersichtlichen Weise in Förderrichtung relativ zueinander so versetzt werden, dass jeweils ein Bearbeitungselement 31 (z. B. 31c) der einen Welle 6 in eine zugeordnete Umfangsnut 36 (z. B. 36a) der Welle 7 und umgekehrt ein Bearbeitungselement 32 (z. B. 32d) der Welle 7 in eine zugeordnete Umfangsnut (z. B. 35a) der Welle 6 eintreten kann, wie Fig. 10 deutlich zeigt. Dabei kann der Außendurchmesser der Bearbeitungselemente 31, 32 wie bei den anderen Ausführungsbeispielen bis zu einem Höchstwert und so vergrößert werden, dass am Ausgang der Bearbeitungszone C zwischen den Wellen 6, 7 einerseits und den Wellen 6, 7 und der Gehäusewand 3 (Fig. 4 bis 6) andererseits Durchtrittsspalte mit vorgewählter Breite verbleiben, wie in Fig. 10 durch einen Durchtrittsspalt 37 zwischen den Wellensegmenten 6c, 7c angedeutet ist.

Im übrigen zeigt Fig. 10, dass derartige Durchtrittsspalte auch am Eingang und zwischen dem Eingang und dem Ausgang der Bearbeitungszone C überall dort vorgesehen werden können, wo die Bearbeitungselemente 31, 32 angeordnet sind. Im Gegensatz zur Verwendung einzelner Vorsprünge (Fig. 1 bis 9) haben die Bearbeitungselemente 31, 32 nach Fig. 10 daher den Vorteil, dass alle von ihnen gebildeten Durchtrittsspalte exakt bemessen werden können. Dadurch kann nicht nur wie im Fall der Fig. 9 am Ausgang, sondern in jedem einer Mehrzahl von Bereichen der Bearbeitungszone C eine kontrollierte Bearbeitung in dem Sinne stattfinden, dass die Partikelgröße des Bearbeitungsguts von Staustufe zu Staustufe in definierter Weise abnimmt.

Eine besonders vorteilhafte Misch- und Knetmaschine wird erhalten, wenn zwischen der Einzugs- und Austragszone A, B mehrere der beschriebenen Bearbeitungszonen vorgesehen sind. Dies ist schematisch in Fig. 1 und 2 angedeutet, wo auf die Bearbeitungszone C zunächst eine kurze Zwischenzone D folgt, die dem Weitertransport des in der Bearbeitungszone C behandelten Materials dient. An diese Zwischenzone D schließt sich eine weitere, der Bearbeitungszone C entsprechende Bearbeitungszone C1 an. Dabei unterscheidet sich die Bearbeitungszone C1 vorzugsweise nur dadurch von der Bearbeitungszone C, dass ihre Durchtrittsspalte enger eingestellt sind. Auf diese Weise kann dafür gesorgt werden, dass das zu mischende und gegebenenfalls aufzuschmelzende Material die hintereinander geschalteten Bearbeitungszonen C, C1 usw. mit einer allmählich kleiner werdenden Partikelgröße von z. B. 2 mm, 1 mm, 0,5 mm usw. verlässt, d. h. kontrolliert und schonend bearbeitet wird.

Die Erfindung ist nicht auf die beschriebenen Ausführungsbeispiele beschränkt, die auf vielfache Weise abgewandelt werden können. Insbesondere ist klar, dass die anhand der Fig. 1 bis 10 beschriebenen Bearbeitungselemente nur Beispiele darstellen, die in vielfacher Weise und in Abhängigkeit vom gewünschten Anwendungszweck variiert werden können. Auch die Herstellung der Wellen 6, 7 und ihrer Bearbeitungselemente ist weitgehend frei wählbar, wobei die Wellen 6, 7 durchgehend einstückig ausgebildet oder aus einer Mehrzahl von hintereinander gekoppelten Segmenten zusammengesetzt werden können. Möglich ist es ferner, die Bearbeitungselemente aus separat hergestellten Ringen oder Hülsen auszubilden und diese nachträglich auf eine im wesentlichen zylindrische Welle aufzuziehen. Dabei können, wie in Fig. 4 bis 6 angedeutet ist, die Wellen 6, 7 an ihrem Außenumfang mit in Längsrichtung verlaufenden Nuten od. dgl. und die Ringe und Hülsen an ihren Innenmänteln mit in diese Nuten einsetzbaren Zähnen od. dgl. versehen sein, um auf einfache Weise eine Drehsicherung zu erhalten. Weiterhin ist die Erfindung nicht auf die beschriebene Art des Bearbeitungsvorgangs beschränkt, der auf vielfache Weise z. B. dadurch verändert werden kann, dass in an sich bekannter Weise zwischen den Einzugs- und Austragszonen A und B weitere Bearbeitungsstationen vorgesehen werden, die zur zusätzlichen Verdichtung, Plastifizierung und/oder ganz anderen Zwecken dienen. Weiterhin können in analoger Weise Misch- und Knetmaschinen mit mehr als zwei Wellen vorgesehen werden, für die die obigen Erläuterungen sinngemäß entsprechend gelten. Schließlich versteht sich, dass die verschiedenen Merkmale auch in anderen als den beschriebenen und dargestellten Kombinationen angewendet werden können.

## Patentansprüche

1. Misch- und Knetmaschine für Kunststoffmassen mit einem Gehäuse (1), wenigstens zwei parallel und drehbar in dem Gehäuse (1) angeordneten Wellen (6, 7) und einem Antrieb (10) zur gleichsinnigen Drehung der Wellen (6, 7), wobei das Gehäuse (1) und die Wellen (6, 7) eine Einzugszone (A), eine in einer Förderrichtung (v) von dieser beabstandete Austragszone (B) und wenigstens eine zwischen diesen beiden Zonen (A, B) angeordnete Bearbeitungszone (C, C1) begrenzen, der an den Wellen (6, 7) ausgebildete, quer zur Förderrichtung von den Wellen (6, 7) abstehende Bearbeitungselemente (16, 17; 29 bis 32) zugeordnet sind, die eine Mehrzahl von in der Förderrichtung (v) hintereinander angeordneten Staustufen bilden, **dadurch gekennzeichnet, dass** die Staustufen durch quer zur Förderrichtung (v) allmählich größer werdende Außenquerschnitte der Bearbeitungselemente (16, 17; 29 bis 32) gebildet sind.

2. Misch- und Knetmaschine nach Anspruch 1, **dadurch gekennzeichnet, dass** die Bearbeitungselemente (16, 17; 29 bis 32) der zwei oder mehr Wellen (6, 7), in Förderrichtung (v) betrachtet, zunächst außer gegenseitigem Eingriff sind und dann allmählich bis zu einem Höchstmaß immer mehr in Eingriff gelangen.

3. Misch- und Knetmaschine nach Anspruch 2, **dadurch gekennzeichnet, dass** die Staustufen verschiedener Wellen (6, 7) zumindest dort, wo die Bearbeitungselemente (16, 17; 29 bis 32) ineinander greifen, durch in Förderrichtung (v) erstreckte, wenigstens der Breite der Bearbeitungselemente (16, 17; 29 bis 32) entsprechende Zwischenräume (20) voneinander beabstandet sind.

4. Misch- und Knetmaschine nach einem der Ansprüche 1 bis 3, **dadurch gekennzeichnet, dass** die Bearbeitungselemenle (16, 17; 29 bis 32) mit radial außen liegenden Enden versehen sind, die an gedachte, mit den Wellen (6, 7) koaxiale, im wesentlichen konisch ausgebildete Flächen (33, 34) grenzen.

5. Misch- und Knetmaschine nach einem der Ansprüche 1 bis 4, **dadurch gekennzeichnet, dass** die Bearbeitungselemente (31, 32) aus einer Mehrzahl von in Förderrichtung (v) beabstandeten, kreisscheibenartig ausgebildeten Wellenabschnitten bestehen, die in Förderrichtung (v) zunehmende Außendurchmesser aufweisen.

6. Misch- und Knetmaschine nach Anspruch 5, **dadurch gekennzeichnet, dass** die Bearbeitungselemente (31, 32) durch Ausbildung von ringförmigen Umfangsnuten (35, 36) in der Bearbeitungszone (C, C1) zugeordneten Wellensegmenten (6c, 7c) gebildet sind.

7. Misch- und Knetmaschine nach einem der Ansprüche 1 bis 4, **dadurch gekennzeichnet, dass** die Bearbeitungselemente (16, 17) aus in Förderrichtung (v) sowie quer dazu beabstandeten Vorsprüngen bestehen.

8. Misch- und Knetmaschine nach Anspruch 7, **dadurch gekennzeichnet, dass** die Bearbeitungselemente (16, 17) am Umfang der Wellen (6, 7) zu quer zur Förderrichtung (v) angeordneten, unterbrochenen Ringen (18, 19) zusammengefasst sind.

9. Misch- und Knetmaschine nach Anspruch 7 oder 8, **dadurch gekennzeichnet, dass** die Bearbeitungselemente (16, 17) so angeordnet sind, dass sie parallel zur Förderrichtung (v) verlaufende Gassen (23, 24) bilden.

10. Misch- und Knetmaschine nach Anspruch 7 oder 8, **dadurch gekennzeichnet, dass** die Bearbeitungselemente (16, 17) so angeordnet sind, dass sie unter einem Winkel zur Förderrichtung (v) verlaufende Gassen (25 bis 28) bilden.

11. Misch- und Knetmaschine nach Anspruch 10, **dadurch gekennzeichnet, dass** die Gassen (25 bis 28) vorwärts fördernd und/oder rückwärts fördernd ausgebildet sind.

12. Misch- und Knetmaschine nach einem der Ansprüche 7 bis 11, **dadurch gekennzeichnet, dass** die Wellen (6, 7) an einem in Förderrichtung (v) hinteren Ende der
Bearbeitungszone (C, C1) mit je einer Staustufe versehen sind, die durch ein Bearbeitungselement (29, 30) in Form eines kreisscheibenartig ausgebildeten Wellenabschnitts gebildet ist.

13. Misch- und Knetmaschine nach einem der Ansprüche 1 bis 12, **dadurch gekennzeichnet, dass** der Hohlraum (2) mit die Wellen (6, 7) umgebenden, zylindrischen Umfangsflächen versehen ist.

14. Misch- und Knetmaschine nach einem der Ansprüche 1 bis 13, **dadurch gekennzeichnet, dass** die Staustufen so ausgebildet sind, dass zwischen den Wellen (6, 7) und dem Gehäuse (1) Durchtrittsspalte mit einer vorgewählten, in Förderrichtung (v) allmählich abnehmenden Breite entstehen.

15. Misch- und Knetmaschine nach einem der Ansprüche 1 bis 14, **dadurch gekennzeichnet, dass** die Staustufen so ausgebildet sind, dass zwischen einander zugewandten Abschnitten der Wellen (6, 7) Durchtrittsspalte mit einer vorgewählten, in Förderrichtung allmählich abnehmenden Breite entstehen.

16. Misch- und Knetmaschine nach einem der Ansprüche 1 bis 15, **dadurch gekennzeichnet, dass** sie mehrere, in Förderrichtung (v) hintereinander liegende Bearbeitungszonen (C, C1) enthält, wobei Austrittsspalte (37) zwischen den Wellen (6, 7) bzw. zwischen diesen und dem umgebenden Gehäuse (1) von einer Bearbeitungszone (C) zu einer in Förderrichtung (v) folgenden Bearbeitungszone (C1) zunehmend schmaler sind.

## Claims

1. Mixing and kneading machine for plastic masses, with a housing (1), with at least two shafts (6, 7) arranged parallel and rotatably in the housing (1), and with a drive (10) for the codirectional rotation of the shafts (6, 7), the housing (1) and the shafts (6, 7) delimiting a draw-in zone (A), a discharge zone (B), spaced apart from the latter in a conveying direction (v), and at least one processing zone (C, C1) which is arranged between these two zones (A, B) and which is assigned processing elements (16, 17; 29 to 32) which are formed on the shafts (6, 7) and project from the shafts (6, 7) transversely with respect to the conveying direction and which form a plurality of build-up stages arranged one behind the other in the conveying direction (v), **characterized in that** the build-up stages are formed by outer cross sections of the processing elements (16, 17; 29 to 32), the said outer cross sections gradually becoming larger transversely with respect to the conveying direction (v).

2. Mixing and kneading machine according to Claim 1, **characterized in that** the processing elements (16, 17; 29 to 32) of the two or more shafts (6, 7) are first out of mutual engagement and then gradually come increasingly into engagement up to a maximum amount, as seen in the conveying direction (v).

3. Mixing and kneading machine according to Claim 2, **characterized in that** the build-up stages of various shafts (6, 7) are spaced apart from one another, at least where the processing elements (16, 17; 29 to 32) engage one in the other, by interspaces (20) extending in the conveying direction (v) and corresponding at least to the width of the processing elements (16, 17; 29 to 32).

4. Mixing and kneading machine according to one of Claims 1 to 3, **characterized in that** the processing elements (16, 17; 29 to 32) are provided with radially outer ends which are adjacent to imaginary essentially conically designed surfaces (33, 34) coaxial with the shafts (6, 7).

5. Mixing and kneading machine according to one of Claims 1 to 4, **characterized in that** the processing elements (31, 32) consist of a plurality of shaft portions designed in the manner of a circular disc, which are spaced apart in the conveying direction (v) and which have outside diameters increasing in the conveying direction (v).

6. Mixing and kneading machine according to Claim 5, **characterized in that** the processing elements (31, 32) are formed as a result of the formation of annular circumferential grooves (35, 36) in shaft segments (6c, 7c) assigned to the processing zone (C, C1).

7. Mixing and kneading machine according to one of Claims 1 to 4, **characterized in that** the processing elements (16, 17) consist of projections spaced apart in the conveying direction (v) and transversely thereto.

8. Mixing and kneading machine according to Claim 7, **characterized in that** the processing elements (16, 17) on the circumference of the shafts (6, 7) are combined to form interrupted rings (18, 19) arranged transversely with respect to the conveying direction (v).

9. Mixing and kneading machine according to Claim 7 or 8, **characterized in that** the processing elements (16, 17) are arranged such that they form aisles (23, 24) running parallel to the conveying direction (v).

10. Mixing and kneading machine according to Claim 7 or 8, **characterized in that** the processing elements (16, 17) are arranged such that they form aisles (25 to 28) running at an angle to the conveying direction (v).

11. Mixing and kneading machine according to Claim 10, **characterized in that** the aisles (25 to 28) are designed to convey forwards and/or to convey backwards.

12. Mixing and kneading machine according to one of Claims 7 to 11, **characterized in that** the shafts (6, 7) are provided, at a rear end of the processing zone (C, C1) in the conveying direction (v), in each case with a build-up stage which is formed by a processing element (29, 30) in the form of a shaft portion designed in the manner of a circular disc.

13. Mixing and kneading machine according to one of Claims 1 to 12, **characterized in that** the cavity (2) is provided with cylindrical circumferential surfaces surrounding the shafts (6, 7).

14. Mixing and kneading machine according to one of Claims 1 to 13, **characterized in that** the build-up stages are designed such as to give rise between the shafts (6, 7) and the housing (1) to passage gaps having a preselected width gradually decreasing in the conveying direction (v).

15. Mixing and kneading machine according to one of Claims 1 to 14, **characterized in that** the build-up stages are designed such as to give rise between mutually confronting portions of the shafts (6, 7) to passage gaps having a preselected width gradually decreasing in the conveying direction.

16. Mixing and kneading machine according to one of Claims 1 to 15, **characterized in that** it contains a plurality of processing zones (C, C1) lying one behind the other in the conveying direction (v), outlet gaps (37) between the shafts (6, 7) or between these and the surrounding housing (1) being increasingly narrower from a processing zone (C) to a processing zone (C1) following in the conveying direction (v).

## Revendications

1. Machine de mélange et de malaxage pour des matières plastiques, comportant un carter (1), au moins deux arbres (6, 7), montés parallèlement et de manière rotative dans le carter (1), et un système d'entraînement (10) destiné à faire tourner les arbres (6, 7) dans le même sens, ledit carter (1) et les arbres (6, 7) délimitant une zone d'admission (A), une zone de sortie (B), située à distance de cette dernière dans le sens de transport (v), et au moins une zone de traitement (C, C1), qui est disposée entre lesdites deux zones (A, B) et à laquelle sont associés des éléments de traitement (16, 17 ; 29 à 32), qui sont formés sur les arbres (6, 7) en s'avançant à partir des arbres (6, 7) transversalement au sens de transport et qui forment une pluralité de crans de retenue, disposés les uns derrière les autres dans le sens de transport (v), **caractérisée en ce que** les crans de retenue sont formés par des sections extérieures des éléments de traitement (16, 17 ; 29 à 32), lesquelles sont peu à peu plus grandes transversalement au sens de transport (v).

2. Machine de mélange et de malaxage selon la revendication 1, **caractérisée en ce que** les éléments de traitement (16, 17 ; 29 à 32) des deux arbres (6, 7) ou davantage sont, par référence au sens de transport (v), d'abord hors de prise réciproque et parviennent ensuite peu à peu toujours plus en prise jusqu'à une valeur maximale.

3. Machine de mélange et de malaxage selon la revendication 2, **caractérisée en ce que** les crans de retenue de différents arbres (6, 7), au moins là où les éléments de traitement (16, 17 ; 29 à 32) entrent en prise les uns dans les autres, sont écartés les uns des autres par des espaces intermédiaires (20), orientés dans le sens de transport (v) et correspondant au moins à la largeur des éléments de traitement (16, 17 ; 29 à 32).

4. Machine de mélange et de malaxage selon l'une quelconque des revendications 1 à 3, **caractérisée en ce que** les éléments de traitement (16, 17 ; 29 à 32) sont munis d'extrémités radialement extérieures, qui sont adjacentes à des surfaces ainsi formes (33, 34) imaginaires, coaxiales aux arbres (6, 7) et sensiblement coniques.

5. Machine de mélange et de malaxage selon l'une quelconque des revendications 1 à 4, **caractérisée en ce que** les éléments de traitement (31, 32) sont formés par une pluralité de tronçons d'arbre en forme de disques circulaires, qui sont situés à distance les uns des autres dans le sens de transport (v) et dont les diamètres extérieurs s'agrandissent dans le sens de transport (v).

6. Machine de mélange et de malaxage selon la revendication 5, **caractérisée en ce que** les éléments de traitement (31, 32) sont formés par la réalisation de rainures périphériques (35, 36) annulaires dans des segments d'arbre (6c, 7c) associés à la zone de traitement (C, C1).

7. Machine de mélange et de malaxage selon l'une quelconque des revendications 1 à 4, **caractérisée en ce que** les éléments de traitement (16, 17) sont formés par des saillies espacées dans le sens de transport (v) et transversalement à celui-ci.

8. Machine de mélange et de malaxage selon la revendication 7, **caractérisée en ce que** les éléments de traitement (16, 17) sont regroupés sur la périphérie des arbres (6, 7) pour former des anneaux (18, 19) interrompus, disposés transversalement au sens de transport (v).

9. Machine de mélange et de malaxage selon la revendication 7 ou 8, **caractérisée en ce que** les éléments de traitement (16, 17) sont disposés de telle sorte qu'ils forment des voies (23, 24) parallèles au sens de transport (v).

10. Machine de mélange et de malaxage selon la revendication 7 ou 8, **caractérisée en ce que** les éléments de traitement (16, 17) sont disposés de telle sorte qu'ils forment des voies (25 à 28) orientées en formant un angle avec le sens de transport (v).

11. Machine de mélange et de malaxage selon la revendication 10, **caractérisée en ce que** les voies (25 à 28) sont configurées pour transporter vers l'avant et/ou vers l'arrière.

12. Machine de mélange et de malaxage selon l'une quelconque des revendications 7 à 11, **caractérisée en ce que** les arbres (6, 7), au niveau d'une extrémité arrière de la zone de traitement (C, C1) par référence au sens de transport (v), sont munis chacun d'un cran de retenue qui est formé par un élément de traitement (29, 30) en forme de tronçon d'arbre réalisé en forme de disque circulaire.

13. Machine de mélange et de malaxage selon l'une quelconque des revendications 1 à 12, **caractérisée en ce que** la cavité (2) avec les arbres (6, 7) est munie de surfaces périphériques enveloppantes, cylindriques.

14. Machine de mélange et de malaxage selon l'une quelconque des revendications 1 à 13, **caractérisée en ce que** les crans de retenue sont réalisés de telle sorte qu'entre les arbres (6, 7) et le carter (1) se forment des fentes de passage avec une largeur prédéterminée, diminuant peu à peu dans le sens de transport (v).

15. Machine de mélange et de malaxage selon l'une quelconque des revendications 1 à 14, **caractérisée en ce que** les crans de retenue sont réalisés de telle sorte qu'entre des tronçons des arbres (6, 7), orientés les uns vers les autres, se forment des fentes de passage avec une largeur prédéterminée, diminuant peu à peu dans le sens de transport.

16. Machine de mélange et de malaxage selon l'une quelconque des revendications 1 à 15, **caractérisée en ce qu'**elle contient plusieurs zones de traitement (C, C1) situées les unes derrière les autres dans le sens de transport (v), sachant que des fentes de sortie (37) entre les arbres (6, 7) ou entre ceux-ci et le carter (1) les entourant sont de plus en plus étroites d'une zone de traitement (C) vers une zone de traitement (C1) consécutive dans le sens de transport (v).
